# EUROPEAN PATENT SPECIFICATION

(11) **EP 3 351 206 B1**
(45) Date of publication and mention of the grant of the patent: **05.08.2020**
(21) Application number: 18160041.2
(22) Date of filing: 03.12.2013
(51) Int. Cl.: A61C 17/26, A61C 17/34

(54) **ELECTRIC BRUSH**
ELEKTRISCHE BÜRSTE
BROSSE ÉLECTRIQUE

(30) Priority: 11.12.2012 NL 2009958
(43) Date of publication of application: 25.07.2018
(62) Divisional of application: 13818478.3
(73) Proprietor: Yeter, Mehmet, 7885 TN Nieuw-Dordrecht (NL)
(72) Inventor: Yeter, Mehmet, 7885 TN Nieuw-Dordrecht (NL)
(74) Representative: Verdijck, Gerardus

(56) References cited:
- DE-A1- 2 655 674
- DE-A1- 3 516 015
- US-A1- 2013 298 340

## Description

The invention relates to an electric brush for cleaning a tongue of a human or animal as defined in the claims.

Good oral care starts with regular cleaning of the teeth. A very common problem is that people do not take the time to brush their teeth, which can result in problems such as cavities. Problems can also occur with people who do adhere to the recommended twice-daily teeth-cleaning if they brush their teeth in the wrong way. A very common problem is that teeth are not cleaned properly because insufficient time is set aside for cleaning the teeth.

A further problem occurring particularly with electric toothbrushes is deterioration in gum health. One of the causes hereof is that, while deposit such as dental plaque is removed from teeth and molars, it accumulates at the gums, which can become irritated or even infected.

An object is to obviate the above stated problems and to provide an electric toothbrush which enables a quick yet thorough cleaning of teeth and molars, wherein gum health is also guaranteed.

DE3516015 discloses an electric brush.

This objective is achieved with the electric toothbrush which is not part of the claimed invention for simultaneous cleaning of the different sides of a tooth or molar, the toothbrush comprising:
- a first brush;
- a second brush; and
- a drive connected to the brushes for setting the brushes into motion,
wherein the first brush is oriented in a first direction for the purpose of cleaning one of the front and rear side of the tooth or molar, and wherein the second brush is oriented in a second direction for the purpose of cleaning the upper side or the other of the front and rear side of the tooth or molar, wherein at least the first brush comprises a roller which is rotatable around its longitudinal axis and wherein the roller of the first brush moves during use over the respective front or rear side in a direction toward the upper side of the tooth or molar.

The electric toothbrush comprises at least two brushes. It is hereby possible to clean different sides of a tooth or molar simultaneously. This saves time. Moreover prevented is that a determined side is forgotten during brushing.

At least one of the first and second brushes is embodied as a roller. The roller is preferably substantially cylindrical. The roller comprises for instance a shaft and bristles attached substantially perpendicularly on the shaft. The rotation axis of the roller is formed by its longitudinal axis which during use runs substantially parallel to the front or rear surface of the tooth or molar. Two rotation directions are possible in such a configuration. According to the invention the roller rotates in that direction wherein the part of the roller which during use makes contact with the front or rear side of the molar moves in the direction of the upper side of the tooth or molar. Deposit such as dental plaque is hereby brushed off the gums. This prevents deposit causing irritation of the gums. The roller is preferably configured to rotate only in this rotation direction. A rotation in opposite direction, wherein deposit is brushed in the direction of the gums, is hereby no longer possible. The rotation direction is optionally adjustable by the user, for instance by means of a knob.

In the context of the invention the upper side of tooth or molar must be understood to mean the side remote from the gums. For molars this is the chewing surface and for teeth this is the cutting surface.

It is noted that the electric toothbrush can be used for both people and animals. For brushing the teeth of animals it is moreover the case that they generally resist cleaning of their teeth. Because the tooth surfaces can be brushed simultaneously with the toothbrush a shorter time is required to brush the teeth of an animal, making this job easier even if the animal puts up resistance.

The first and second brush are for instance each arranged on an arm. More shapes and sizes are for instance hereby possible.

Because a plurality of brushes is provided, the user is forced to place the toothbrush against his/her teeth or molars in the correct manner. This in contrast to toothbrushes with a single brush head, wherein the user adjusts the rotation direction of the brush head relative to the teeth or molars by rotating the toothbrush. The correct rotation direction is therefore always guaranteed by means of the invention.

In a preferred example the first direction and the second direction are opposed such that during use the first brush acts on one of the front and rear side of the tooth or molar and during use the second brush acts on the other of the front and rear side of the tooth or molar.

The first and second brush co-act so that the front and rear surfaces are cleaned simultaneously during use. When the same type of brush is used for both brushes, the rotation axes of the first and second brush are preferably substantially parallel to each other. The rotation of the brushes is preferably in opposite directions.

In a further preferred example the second brush comprises a roller rotatable around its longitudinal axis, wherein during use the roller of the second brush moves over the respective front or rear side in a direction toward the upper side.

In other words, both the first and second brushes comprise a roller which brushes deposit away from the gums in the direction of the upper side of the tooth or molar. The advantages as described above with reference to the first roller hereby also apply to the second roller.

The roller is preferably substantially cylindrical. The roller for instance comprises a shaft and bristles attached substantially perpendicularly on the shaft.

In a further preferred example the first brush is provided in resilient relation to the second brush.

The brushes can hereby move relative to each other to some extent. The toothbrush according to the invention can thus compensate for the difference in thickness between teeth and molars in a set of teeth. A resilient element for instance defines a rest position in which the first brush is situated a first distance from the second brush. The brushes are moved along a row of teeth and molars during use, wherein the first and second brush are pressed apart by teeth or molars with a thickness greater than the first distance. The brushes move here counter to the resilient force. If the toothbrush is then displaced to a tooth or molar of a smaller thickness, the resilient force pushes the brushes back again.

The first brush and second brush are for instance provided such that some resilient force is always exerted on the first and second brush so that they are pressed against their respective side of the tooth or molar. This achieves that the brushes make good contact with the surfaces for brushing.

In a further preferred example the toothbrush comprises a spacing means which holds the first and second brush at a mutual distance or within a range, wherein the spacing means is adjustable for the purpose of adjusting this distance or range.

The distance can thus be adjusted to the teeth of the specific user. It is likewise possible to use a resilient element as spacing means so that the first brush is provided in resilient relation to the second brush as described above, wherein the distance between the brushes is adjustable in the rest position of the resilient element.

In a currently preferred example the electric toothbrush according to the invention comprises a control such as a slider or rotary knob connected to the adjustable spacing means for adjustment of the distance by the user. Each brush is preferably provided on the outer end with an arm, and the arms are movable relative to each other in order to adjust the distance between the brushes. For this purpose the toothbrush comprises for instance a wedge positioned between the arms and movable between a first position, in which the brushes are provided at a first distance relative to each other, and a second position in which the brushes are provided at a second distance, greater than the first distance, relative to each other. The wedge is for instance movable by operating the slider or rotary knob.

The control is for instance configured such that actuation of the control, such as pressing a button, increases the distance between the brushes while releasing the control reduces the distance between the brushes, so that the brushes are pressed against the teeth or molars during use.

In an example in which more than two brushes are provided the distance between the brushes is preferably also adjustable using a control. The position of a brush relative to the other brushes is for instance adjustable for each brush individually. In another embodiment the relative positions are adjusted together.

An advantage is that the user can choose the distance perceived by him or her as easy to use by means of the control.

In an example the electric toothbrush comprises a sensor for measuring the distance of at least one of the first and second brush to the tooth or molar, wherein the spacing means is configured to adjust the distance between the first and second brush on the basis of a distance measured by the sensor.

The sensor comprises for instance a transmitter for transmitting a signal, for instance infrared or ultrasonic, and a receiver for receiving a reflected signal for the purpose of measuring the distance of the brush to a tooth or molar. The sensor is connected to a control mechanism such that the spacing means adjusts the distance between the brushes on the basis of the measurements of the sensor. The correct distance is hereby set automatically.

In a preferred example the at least one roller comprises a soft material.

The at least one roller for instance comprises soft bristles as known from conventional toothbrushes, a soft plastic or rubber. The soft material has for instance a hardness of less than 50 Shore A, more preferably a hardness of less than 40 Shore A, still more preferably a hardness of less than 35 Shore A, and most preferably a hardness of less than 30 Shore A.

Owing to the soft material only a small force is exerted on the tooth or molar and the gums. Gum recession is hereby prevented. With conventional toothbrushes this problem occurs because the device is pressed too hard against the gums. The toothbrush according to the invention prevents this. The gums are also massaged, which even has a positive effect on gum health.

In a preferred example the at least one roller is at least partially covered on its side remote during use from respectively the front and rear surface of the tooth or molar by a protective cover.

The protective cover prevents the roller moving over other parts of the mouth, for instance the cheek. Such movements over parts of the mouth other than the teeth are perceived as unpleasant. It hereby achieves comfortable teeth-cleaning.

In a further example the protective cover covers substantially half of the roller.

In a preferred example according to the invention the rotation speed of the at least one roller is adjustable.

The cover is preferably coupled releasably to the toothbrush. The cover can therefore be removed, for instance to be cleaned. After being cleaned the cover can be coupled to the toothbrush again in simple manner.

The cover is for instance provided with openings, the length or width of in any case one of which is less than 1 cm, preferably less than 0.8 cm and most preferably less than 0.5 cm, for instance 0.3 cm. The openings are for instance elongate or round. The openings make it possible to clean the cover without taking the cover off the toothbrush, by allowing water to flow through the openings.

The electric toothbrush has for instance two or more settings, for instance three or four settings. The user can determine which rotation speed he\she wants, for instance by operating a knob.

In a currently preferred example the electric toothbrush comprises a third brush connected to the drive, wherein the third brush is oriented in a third direction for the purpose of cleaning a further side of a tooth or molar such that during use the brushes each act on another of the front side, rear side or upper side of the tooth or molar.

This achieves that each exposed side of the tooth or molar is cleaned in one operation using the toothbrush according to the invention.

In other words, the three brushes define a space in which a tooth or molar can be received.

Because of this arrangement of the brushes the at least one roller will always have the desired rotation direction relative to the respective side surface of the tooth or molar: the user cannot place the toothbrush on the tooth or molar in incorrect manner.

The third brush can be embodied as a roller or conventional brush. The third brush can be driven for continuous rotation in the same direction. Preferably however the third brush is driven for reciprocal movement so that the brush rotates alternately in the one direction and the other direction. The third brush can alternatively or additionally also perform a vibrating movement.

In a further example the speed of movement of the brush acting during use on the upper side of the tooth or molar is independent of the rotation speed of the at least one roller.

Brushing of the upper side of the tooth or molar can be performed at a different speed of movement than brushing of the front and rear side of the tooth or molar. As described above, it is important that the gums are not treated too roughly on the front and rear side of the tooth or molar. At the upper side of the tooth or molar however this is not a problem, or is less of a problem, whereby a different speed of movement can be applied here.

It is noted that for the same reason it is possible to opt for a brush other than a roller for the upper side. It is also possible to opt for a vibrating movement instead of a continuous rotating movement as in the case of a roller according to the invention.

The electric toothbrush optionally comprises a sensor connected to the drive for detecting an orientation of the toothbrush, wherein the drive is configured to adjust the rotation direction and/or speed of one or more brushes on the basis of the detected orientation. The rotation direction changes for instance when the toothbrush is rotated 180 degrees.

The specification also relates to an attachment connectable to an electric toothbrush in order to obtain an electric toothbrush as described above. The attachment comprises a first brush oriented in a first direction for cleaning one of the front and rear side of a tooth or molar and a second brush oriented in a second direction for cleaning the upper side or the other of the front and rear side of the tooth or molar. The first brush preferably comprises a roller rotatable around its longitudinal axis such that during use the roller moves over the respective front or rear side in a direction toward the upper side of the tooth or molar. The roller is preferably substantially cylindrical. The roller comprises for instance a shaft and bristles attached substantially perpendicularly on the shaft.

In a preferred example each brush is provided on a separate bendable arm. The bendable arm comprises for instance a plastic and/or a metal. The bendable arm is for instance provided as a metal, for instance iron, wire with a plastic sheath. The relative position of the brushes can be adjusted by the user using the bendable arms. These bendable arms can also be applied in other multi-head toothbrushes, for instance non-electric toothbrushes.

The same advantages and effects apply for the attachment as described above for the electric toothbrush .

The invention relates to an electric brush for cleaning a tongue of a human or animal, comprising:
- a handle; and
- a brush head arranged on the outer end of the handle and comprising a brush rotatable by a drive.

The drive is for instance configured to have the brush perform a reciprocal movement, such as a movement in which the brush rotates alternately in the one direction or the other direction. The drive is however preferably configured to have the brush perform a continuous rotation in the same rotation direction.

The rotation axis of the brush is preferably perpendicular to the longitudinal direction of the handle. This brings about a displacement of deposit in the longitudinal direction of the tongue. The rotation direction of the brush is preferably such that deposit is brushed in the direction of the mouth opening.

The brush is preferably embodied as a roller, i.e. a substantially cylindrical element. The brush roller comprises for instance a rough surface. The brush roller is for instance provided with a soft material which is preferably to some extent resilient. The brush can alternatively or additionally be provided with bristles.

The tongue brush comprises a cover which covers a part of the brush. The cover in any case covers the sides perpendicularly of the rotation shaft of the brush. The cover preferably covers substantially half the brush surface of the brush. The cover is removable and is provided with openings, as described above in respect of the toothbrush according to the invention.

The tongue brush preferably comprises a transmission for transmitting the rotating movement of the drive to the brush roller. The transmission preferably comprises a belt. This enables a compact and robust transmission. Because no toothed wheels are required, the belt prevents accumulation of deposit such as toothpaste residues between toothed wheels resulting in jamming of the tongue brush. The production of the tongue brush is moreover simplified by the use of the belt as transmission. The belt is for instance partially or wholly accommodated in the handle and/or the above described cover.

The handle preferably comprises a space for receiving an accumulator or battery. The diameter of the handle is preferably a maximum of about 50 mm, preferably a maximum of about 40 mm and more preferably a maximum of about 35 mm. This provides sufficient space for receiving at least one AA battery (15 mm). The length of the handle is preferably a minimum of about 60 mm, more preferably a minimum of about 120 mm, preferably about 130-140 mm. The brush head has for instance a length of about 40-60 mm, for instance about 50 mm.

Further advantages, details and effects will be described below on the basis of exemplary embodiments, wherein reference is made to the accompanying figures.
- Figure 1 shows a toothbrush which does not fall within the scope of the claims ;
- Figure 2 shows the upper part of the toothbrush in use during cleaning of a molar;
- Figure 3 shows a tongue brush according to the invention;
- Figure 4 shows in detail the brush head of the tongue brush of figure 3; and
- Figure 5 shows a cut-away drawing of the tongue brush of figures 3 and 4.

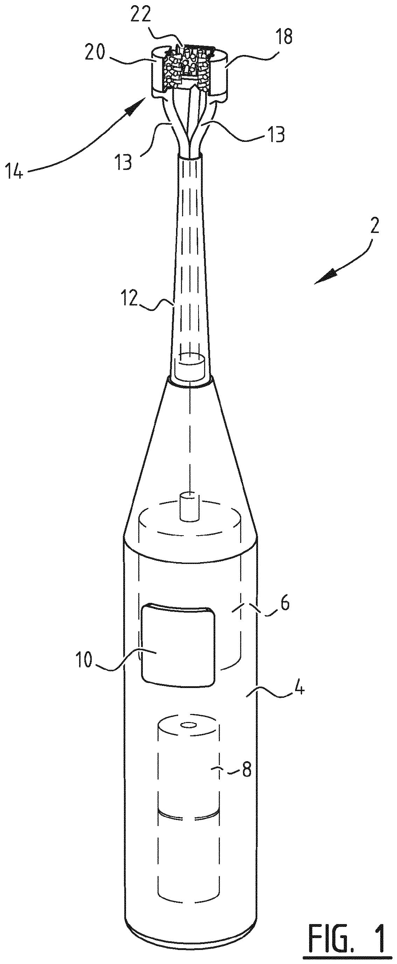

Electric toothbrush 2 (figure 1) comprises a housing 4 with an electric motor 6. Batteries 8 are provided in housing 4 as energy source for motor 6. An accumulator can alternatively be used . Motor 6 can be switched on and off by means of knob 10. The speed is also adjustable with knob 10.

Toothbrush 2 further comprises an arm 12 via which the movement of motor 6 is transmitted to the brushes on the upper part 14 of toothbrush 2.

As shown, each brush is provided on a separate arm 13 connected to arm 12.

Arms 13 are for instance individually disconnectable from and connectable to arm 12. Brushes 18, 20, 22 are hereby individually replaceable.

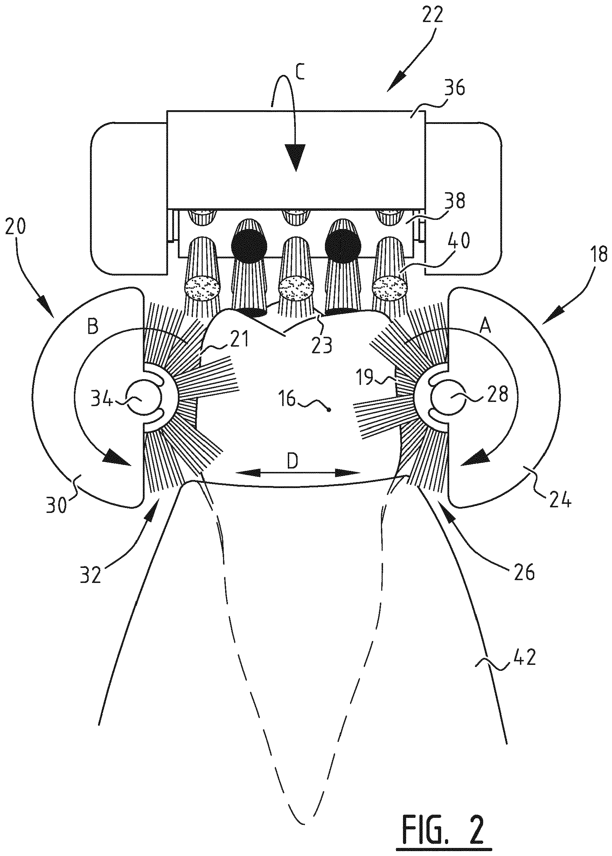

The brushes act on molar 16 during use as follows (figure 2). First brush 18 is oriented toward the front side 19 of molar 16, second brush 20 is oriented toward the rear side 21 of molar 16 and third brush 22 is oriented toward the upper side 23 of molar 16 (the chewing surface). Brush 18 comprises a protective cover 24 inside which roller 26 can rotate around rotation shaft 28, wherein roller 26 rotates continuously in direction A. Brush 20 comprises protective cover 30 inside which roller 32 rotates continuously around shaft 34 in direction B. Brush 22 comprises protective cover 36 inside which roller 38 rotates continuously as according to arrow C. Protective covers 24, 30, 36 cover about half of their respective rollers 26, 32, 38.

In this example rollers 26, 32, 38 comprise bristles, such as shown for roller 38 with reference numeral 40. These are bristles of the soft type, wherein it is possible to opt for a harder type of bristle for brush 22 than for rollers 26, 32.

One roller can comprise different types of bristle, as shown schematically in figure 2, in which black hatching designates a first type of bristle and dotted hatching a second type of bristle, for instance a harder or softer type of bristle.

Rollers 26, 32, 38 rotate during use in directions A, B, C respectively. Deposit such as dental plaque on front and rear sides 19, 21 of molar 16 is hereby brushed in the direction toward upper surface 23 of the molar. This prevents deposit being brushed in the direction of gums 42.

As shown in the figure, the rotation shaft of roller 38 lies in this embodiment in a different orientation relative to the rotation shaft of rollers 26 and 32, which lie substantially parallel. The rotation shaft of roller 38 is preferably oriented substantially perpendicularly relative to the rotation shaft of rollers 26 and 32.

In the shown example rollers 26 and 32 are provided in resilient relation to each other, for instance through resilient action of the sub-arms, so that the distance between the rollers can vary as according to arrow D. The rollers are pressed apart to some extent by the presence of molar 16. In the case of a narrower tooth or molar the rollers are moved toward each other by the resilient force that is present (not shown).

It is noted that in the shown example arm 12 is provided co-axially relative to housing 4. It is however also possible to provide the arm on which the brushes are mounted at an angle to the housing.

One or more of the brushes 18, 20, 22, preferably brush 22, are alternatively equipped with a brush with a toothpick function. A good cleaning between teeth or molars is hereby achieved.

Brushing of a set of teeth will be described below. The user provides the brushes with toothpaste. The user then places the brushes round the teeth of the lower two teeth quadrants. The user switches the toothbrush on by operating knob 10. The user moves the toothbrush along the teeth and molars of the lower jaw so that brushes 18, 20, 22 simultaneously clean the front, rear and upper surfaces 19, 21, 23 of these teeth and molars. The user subsequently places the toothbrush such that the teeth and molars of the upper jaw are now cleaned. Following cleaning the user switches the toothbrush off by operating knob 10.

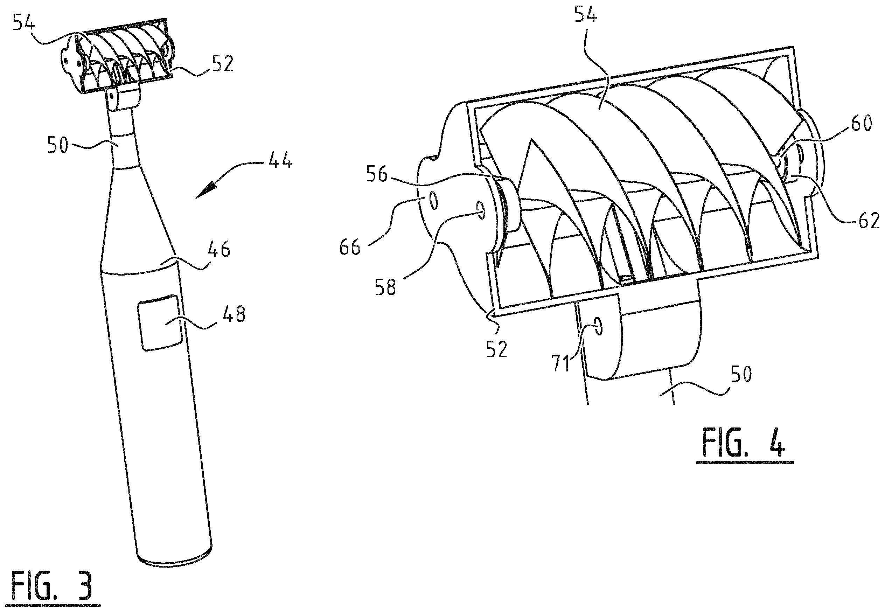

Tongue brush 44 (figure 3) comprises a housing 46 which also serves as handle. Housing 46 comprises a control in the form of a knob 48 for switching tongue brush 44 on and off. The rotation speed and direction of the tongue brush can for instance also be adjusted with knob 48 or with one or more additional knobs. In the shown embodiment housing 46 has a diameter of about 30-40 mm. Housing 46 provides space for two batteries, for instance AA batteries (3 Volt). Alternatively, only one battery is accommodated in housing 46. In another alternative an accumulator is accommodated in housing 46. Housing 46 comprises for instance a connection for coupling a cable for the purpose of charging the batteries or accumulator.

Tongue brush 44 further comprises brush head 50. On its outer end brush head 50 comprises a cover 52 in which brush roller 54 is provided.

Cover 52 comprises a tab 56 (figure 4) for receiving shaft 58 of brush 54. Shaft 58 is connected to wheel (or pulley) 60 which is configured to receive belt 62 for the purpose of transmitting the rotation of the drive to brush 54.

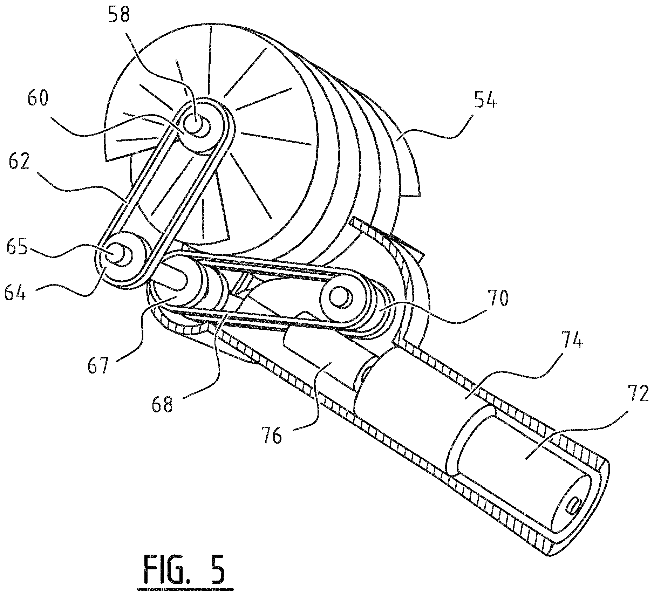

Belt 62 is likewise provided around wheel 64 (figure 5), which is accommodated in part 66 (figure 4) of cover 52. Wheel 64 is connected via shaft 65 (figure 5), or alternatively directly, to wheel 67 which is provided with a second belt 68. Belt 68 is moreover connected to toothed wheel 70. Toothed wheel 70 is accommodated in part 71 of brush head 50. The rotation of toothed wheel 70 can thus be transmitted via belt 68, wheel 67, shaft 65, wheel 64, belt 62 and wheel 60 to brush 54.

An electric motor (not shown) is accommodated in handle 46. The electric motor drives toothed wheel 76 via an optional transmission 72 and optional bearings 74. Toothed wheel 76 can be embodied as a worm wheel or cylindrical toothed wheel. Toothed wheel 76 engages on toothed wheel 70 in order to thus transmit the rotation.

In the shown embodiment brush roller 54 has a spiral shape. Bristles are arranged here in a spiral shape around a central shaft (the individual bristles are not shown in the figure). Another shape, such as a cylinder shape, is however also possible according to the invention. A brush roller of a soft material can be provided instead of a brush roller with bristles.

The cut-away drawing of figure 5 shows one half of brush head 50. For the production of the brush head the housing can be manufactured in two halves. Following placing of components 54, 60, 62, 64, 65, 67, 68, 70, 72, 74 and 76 the halves are joined together and fixed to each other, for instance by ultrasound welding.

The rights sought are defined by the following claims.

It is also possible according to the invention to provide a toothbrush or attachment with a single brush head which is embodied as a roller driven rotatably around its longitudinal axis. The roller comprises for instance a shaft and bristles arranged substantially perpendicularly on the shaft. In an embodiment the length of the roller is 1-5 cm, preferably 1.5-4.5 cm, more preferably 2-4 cm, still more preferably 2.5-3.5 cm and most preferably about 3 cm. This length is found to be particularly suitable for cleaning a tongue. Such a toothbrush alternatively or additionally comprises a sensor for detecting the orientation of the toothbrush, this sensor being connected to the drive such that the rotation direction of the roller is adjusted to the orientation of the toothbrush, as described above.

## Claims

1. Electric brush (44) for cleaning a tongue of a human or animal, comprising:
- a handle;
- a drive, and
- a brush head arranged on the outer end of the handle comprising
- a brush (54) rotatable by the drive; and
- a cover (52) which covers at least part of the brush;
wherein the cover is removable and provided with openings.

2. Electric brush according to claim 1, wherein the brush is configured for alternately rotating the brush in the one direction or the other direction.

3. Electric brush according to claim 1, wherein a rotation direction of the brush is such that deposit is brushed in the direction of the mouth opening.

4. Electric brush according to any one of the preceding claims, wherein the brush comprises a rotation axis, wherein the rotation axis of the brush is perpendicular to the longitudinal direction of the handle.

5. Electric brush according to claim any of the preceding claims, wherein the cover covers the sides perpendicularly of the rotation shaft of the brush, and preferably covers substantially half the brush surface of the brush.

6. Electric brush according to any one of the preceding claims, wherein the brush is embodied as a substantially cylindrical element.

7. Electric brush according to claim 6, wherein the brush is embodied as a roller.

8. Electric brush according to claim 6 or 7, wherein the cylindrical element comprises a rough surface.

9. Electric brush according to any one of the claims 6 - 9, wherein the brush comprises a transmission for transmitting a rotating movement of the drive to the cylindrical element.

10. Electric brush according to claim 9, wherein the transmission comprises a belt.

11. Electric brush according to any one of the preceding claims, wherein the handle comprises a space for receiving an accumulator or battery.

## Patentansprüche

1. Elektrische Bürste (44) zum Reinigen einer Zunge von einem Mensch oder einem Tier, umfassend:
- einen Griff;
- einen Antrieb, und
- einen Bürstenkopf, welcher an dem äußeren Ende von dem Griff angeordnet ist, umfassend
- eine Bürste (54), welche durch den Antrieb drehbar ist; und
- eine Abdeckung (52), welche zumindest einen Teil von der Bürste abdeckt;
wobei die Abdeckung entfernbar ist und mit Öffnungen versehen ist.

2. Elektrische Bürste gemäß Anspruch 1, wobei die Bürste konfiguriert ist zum abwechselnden Drehen der Bürste in der einen Richtung oder in der anderen Richtung.

3. Elektrische Bürste gemäß Anspruch 1, wobei eine Drehrichtung der Bürste derartig ist, dass Ablagerungen in die Richtung zu der Mundöffnung gebürstet werden.

4. Elektrische Bürste gemäß irgendeinem der vorhergehenden Ansprüche, wobei die Bürste eine Drehachse umfasst, wobei die Drehachse der Bürste senkrecht zu der Längsrichtung von dem Griff ist.

5. Elektrische Bürste gemäß irgendeinem der vorhergehenden Ansprüche, wobei die Abdeckung die Seiten senkrecht von der Drehachse von der Bürste abdeckt und vorzugsweise im Wesentlichen die Hälfte der Bürstenoberfläche der Bürste abdeckt.

6. Elektrische Bürste gemäß irgendeinem der vorhergehenden Ansprüche, wobei die Bürste als ein im Wesentlichen zylindrisches Element ausgeführt ist.

7. Elektrische Bürste gemäß Anspruch 6, wobei die Bürste als eine Rolle ausgeführt ist.

8. Elektrische Bürste gemäß Anspruch 6 oder 7, wobei das zylindrische Element eine raue Oberfläche umfasst.

9. Elektrische Bürste gemäß irgendeinem der Ansprüche 6 - 9, wobei die Bürste eine Übertragung zum Übertragen einer Drehbewegung des Antriebs von dem zylindrischen Element umfasst.

10. Elektrische Bürste gemäß Anspruch 9, wobei die Übertragung einen Riemen umfasst.

11. Elektrische Bürste gemäß irgendeinem der vorhergehenden Ansprüche, wobei der Griff einen Raum zum Aufnehmen eines Akkumulators oder einer Batterie umfasst.

## Revendications

1. Brosse électrique (44) permettant de nettoyer une langue d'un humain ou d'un animal, comprenant :
- un manche ;
- un entraînement, et
- une tête de brosse agencée sur l'extrémité extérieure du manche comprenant
- une brosse (54) pouvant tourner grâce à l'entraînement ; et
- un cache (52) qui recouvre au moins une partie de la brosse ;
dans laquelle le cache est amovible et pourvu d'ouvertures.

2. Brosse électrique selon la revendication 1, dans laquelle la brosse est configurée pour faire tourner en alternance la brosse dans la une direction ou l'autre direction.

3. Brosse électrique selon la revendication 1, dans laquelle une direction de rotation de la brosse est telle qu'un dépôt est brossé dans la direction de l'ouverture de bouche.

4. Brosse électrique selon l'une quelconque des revendications précédentes, dans laquelle la brosse comprend un axe de rotation, dans laquelle l'axe de rotation de la brosse est perpendiculaire à la direction longitudinale du manche.

5. Brosse électrique selon l'une quelconque des revendications précédentes, dans laquelle le cache recouvre les côtés perpendiculairement à l'arbre de rotation de la brosse, et de préférence recouvre sensiblement la moitié de la surface de brosse de la brosse.

6. Brosse électrique selon l'une quelconque des revendications précédentes, dans laquelle la brosse se présente sous la forme d'un élément sensiblement cylindrique.

7. Brosse électrique selon la revendication 6, dans laquelle la brosse se présente sous la forme d'un rouleau.

8. Brosse électrique selon la revendication 6 ou 7, dans laquelle l'élément cylindrique comprend une surface rugueuse.

9. Brosse électrique selon l'une quelconque des revendications 6 à 9, dans laquelle la brosse comprend une transmission permettant de transmettre un mouvement rotatif de l'entraînement à l'élément cylindrique.

10. Brosse électrique selon la revendication 9, dans laquelle la transmission comprend une courroie.

11. Brosse électrique selon l'une quelconque des revendications précédentes, dans laquelle le manche comprend un espace permettant de recevoir un accumulateur ou une batterie.
